# EUROPÄISCHE PATENTANMELDUNG

(11) **EP 1 570 734 A1**
(43) Veröffentlichungstag der Anmeldung: **07.09.2005**
(21) Anmeldenummer: 04005215.1
(22) Anmeldetag: 05.03.2004
(51) Int. Cl.: A01M 1/22, A01M 1/20, A01M 1/24

(54) **Vorrichtung zur präventiven Verhinderung eines Befalls eines Bodenvolumens von tierischen Schädlingen, insbesondere Termiten**

(71) Anmelder: Pollinger, Hartwig, Dr., 11100 Aosta (IT)
(72) Erfinder: Pollinger, Hartwig, Dr., 11100 Aosta (IT)
(74) Vertreter: nospat Patentanwälte

(57) **Zusammenfassung**

Die Erfindung betrifft eine Vorrichtung zur präventiven Verhinderung eines Befalls eines Bodenvolumens (2) von im Erdboden hausenden tierischen Schädlingen, insbesondere Termiten, unter Verwendung einer mit einem Mikrowellengenerator (13) über ein Koaxialkabel (14) verbundenen, in den Erdboden einführbaren Antenne (6), über welche Mikrowellenenergie abstrahlbar ist.

Erfindungsgemäß wird diese Aufgabe dadurch gelöst, daß um das zu schützende Bodenvolumen (2) bzw. um speziell zu schützende Objekte (3) im oder auf dem Bodenvolumen eine abgrenzende Schutzvorrichtung (5) vorgesehen ist, welche aus einer Mehrzahl von gleich- oder ungleich beabstandeten, in den Erdboden eingeführten Antennen (6) für die Abstrahlung von Mikrowellenenergie besteht.

## Beschreibung

Die Erfindung betrifft eine Vorrichtung zur präventiven Verhinderung eines Befalls eines Bodenvolumens von im Erdboden hausenden tierischen Schädlingen, insbesondere Termiten, unter Verwendung einer mit einem Mikrowellengenerator über ein Koaxialkabel verbundenen, in den Erdboden einführbaren Antenne, über welche Mikrowellenenergie abstrahlbar ist.

Als tierische Schädlinge werden üblicherweise Tiere bezeichnet, die dem Menschen und seiner Wirtschaft Schaden zufügen. Dabei handelt es sich insbesondere, aber nicht ausschließlich um Insekten, wovon Termiten als Holzschädlinge hinsichtlich ihres Einwirkens auf lebende und Bauhölzer besonders schädlich sind.

Zur Bekämpfung derartiger Schädlinge ist es üblich, technisch/mechanische und/oder chemische Mittel einzusetzen. Während chemische, vor allem toxische Mittel meist mit mehr oder weniger erheblichen Umweltbelastungen einhergehen, sind technisch/mechanische Mittel oft mit erheblichem Aufwand bei ungenügenden Ergebnissen verbunden.

Aus DE 27 31 905 A1 ist ein Verfahren zum Austreiben von Weichtieren aus dem Erdreich bekannt, wobei zwei in den Erdboden einführbare Erdpole über Kabel mit einem elektrisch gespeisten Impulsgenerator verbunden sind. Bei Inbetriebnahme werden elektrische Impulse hoher Spannung und geringer Leistung in das Erdreich eingebracht, so daß Weichtiere, wie Würmer, Schnecken usw. ausgetrieben und abgesammelt werden können.

Nach DE 28 00 517 A1 sind ein Verfahren und eine Vorrichtung zur Schädlingsbekämpfung, insbesondere von Insekten und Nagern, bekannt, wobei ein Zug aus elektrischen Impulsen in einer vorgewählten Reihenfolge erzeugt und einer Vielzahl von oberirdisch angeordneten Spulen zugeführt wird, um ein Energiefeld mit einer vorbestimmten Folge von Flußrichtungen zu erregen, welches auf die Schädlinge einwirkt.

Weiter ist es aus WO 84/04 656 A1 bekannt, ein Paar von elektrischen Spitzen in den Erdboden beiderseits der Wurzeln einer schädlingsbefallenen Pflanze einzubringen und Hochspannungsimpulse einzuspeisen.

Aus DE 40 26 589 A1 ist es des weiteren bekannt, stabförmige, einzelne Segmente aufweisende Elektroden um eine Oberfläche eines Bodenvolumens in den Erdboden einzubringen und eine elektrische Impulsspannung segmentweise anzulegen, um durch unterschiedliche Lagen des erzeugten elektrischen Feldes ein Austreiben von Würmern aus dem Bodenvolumen zu erreichen.

Diesen bekannten Lösungen ist gemeinsam, daß sie insbesondere bei der Schädlingsbekämpfung auf größeren Bodenflächen bzw. in größeren Bodenvolumina bei erheblichem gerätemäßigen Aufwand nur ungenügende Ergebnisse zeigen.

Es ist weiterhin bekannt, zur Schädlingsbekämpfung Mikrowellen einzusetzen. So beschreibt DE 38 04 052 A1 ein fahrbares Mikrowellengerät, wodurch entsprechende Organismen oberirdisch durch aufgestrahlte Mikrowellenenergie vernichtet werden können. Das Gerät versagt allerdings bei tiefer im Erdboden hausenden Schädlingen. Aus JP 2002000153 A ist ein Termitenausrottungsgerät bekannt, wobei eine mit einem Mikrowellengerät verbundene flexible Antenne definierter Länge in Gänge der Tiere eingeführt und Mikrowellenenergie eingebracht wird. Die Vernichtung von fortpflanzungsfähigen Schädlingen ist dabei allerdings eher zufällig. Nach DE 102 13 983 C1 sind ein Verfahren und eine Vorrichtung zur Bekämpfung von im Erdboden hausenden Schädlingen, insbesondere Termiten bekannt. Dabei ist die gezielte Bekämpfung von fortpflanzungsfähigen tierischen Schädlingen effektiv möglich, da entsprechende Nester lokalisiert, angebohrt und mittels in die Bohrung eingeführter Antenne mit Mikrowellenenergie vernichtet werden.

Neben den bereits genannten Nachteilen dieser bekannten Lösungen setzt die entsprechende Schädlingsbekämpfung den bereits erfolgten Befall der betreffenden Bodenfläche bzw. des Bodenvolumens mit tierischen Schädlingen voraus. D. h. gebietsgebundene tierische Schädlinge haben sich bereits eingenistet, vermehren sich und verursachen bereits mehr oder weniger erhebliche Schäden an Bauwerken und/oder Pflanzen, z. B. auf Plantagen, Feldern u. dgl. Nicht gebietsgebundene Schädlinge dringen einfach in das entsprechende Gebiet zeitweise ein und verursachen Schaden, ohne die Möglichkeit einer wirkungsvollen Bekämpfung.

In Anbetracht der Nachteile des bekannten Standes der Technik liegt der Erfindung die Aufgabe zugrunde, eine Vorrichtung zur präventiven Verhinderung eines Befalls eines Bodenvolumens von im Erdboden hausenden tierischen Schädlingen, insbesondere Termiten, anzugeben, wobei einerseits bei hoher Effektivität ein Befall eines Bodenvolumens mit tierischen Schädlingen unter Nutzung von Mikrowellenenergie bei weitgehender Sicherheit verhindert wird und andererseits bereits in das Bodenvolumen eingedrungene Schädlinge im Wirkbereich der Mikrowellenenergie vernichtet werden.

Erfindungsgemäß wird diese Aufgabe dadurch gelöst, daß um das zu schützende Bodenvolumen bzw. um speziell zu schützende Objekte im oder auf dem Bodenvolumen eine abgrenzende Schutzvorrichtung vorgesehen ist, welche aus einer Mehrzahl von gleich- oder ungleich beabstandeten, in den Erdboden eingeführten Antennen für die Abstrahlung von Mikrowellenenergie besteht.

Diese erfindungsgemäß ausgestaltete Vorrichtung ermöglicht eine hocheffektive Verhinderung des Befalls eines Bodenvolumens mit tierischen Schädlingen unter Nutzung von Mikrowellenenergie. Dabei wird durch die beabstandete Anordnung von Antennen für die Abstrahlung von Mikrowellenenergie eine abgrenzende Schutzvorrichtung derart geschaffen, daß sich jeweils um die einzelne Antenne ein Mikrowellenenergiefeld ausbildet. Die Antennen sind dabei derart beabstandet, daß sich die jeweiligen Mikrowellenenergiefelder im Außenbereich tangieren, so daß es im Verlauf der Schutzvorrichtung keine Stelle gibt, an der die Feldstärke des Mikrowellenenergiefelds zu gering für eine wirksame Schädlingsbekämpfung wäre. Demgemäß kann die abgrenzende Schutzvorrichtung durch die Schädlinge nicht durchbrochen werden, d. h. nicht gebietsgebundene Schädlinge können nicht (lebend und ggf. fortpflanzungsfähig) )von außen in das Bodenvolumen mit seinen dort vorhandenen Bauwerken, Pflanzen u. dgl. eindringen, sich dort einnisten und Schäden verursachen.

Jedoch ermöglicht die erfindungsgemäße Vorrichtung auch die bereits im Bodenvolumen vorhandenen, ggf. durch Einschleppung eingebrachten tierischen Schädlinge im Wirkbereich der Mikrowellenenergie sicher und umweltschonend zu vernichten, indem die Antennen der Schutzvorrichtung derart im Bereich besonders zu schützender Objekte angeordnet sind, daß deren Mikrowellenenergiefelder die Objekte mit für eine Vernichtung der Schädlinge ausreichender Feldstärke tangieren.

In vorteilhafter Ausgestaltung der erfindungsgemäßen Vorrichtung sind die Antennen der Schutzvorrichtung über eine Koaxialkabelanordnung mit einem oder mehreren zentralen Mikrowellengenerator(en) für die Einspeisung von Mikrowellenenergie in eine größere Anzahl von Antennen verbunden. Zweckmäßig ist weiterhin die Stromzufuhr zum Mikrowellengenerator manuell und/oder automatisch steuerbar. Weiter ist es zweckmäßig, daß die Einspeisung von Mikrowellenenergie in die Antennen der Schutzvorrichtung manuell und/oder automatisch steuerbar ist. Dabei ist es besonders günstig, daß eine permanente und/oder in vorwählbaren Zeitintervallen erfolgende Einspeisung von Mikrowellenenergie in die Antennen der Schutzvorrichtung erfolgt. In vorteilhafter Ausgestaltung ist eine Steuereinheit dem oder den zentralen Mikrowellengenerator(en) vorgeschaltet, die die Stromzufuhr zu dem/den zentralen Mikrowellengenerator(en) und/oder die Einspeisung der Mikrowellenenergie in die Antennen steuert.

Zweckmäßigerweise sind die einem zentralen Mikrowellengenerator zugeordneten Antennen über die Koaxialkabelvorrichtung parallel verschaltet, um jeder Antenne eine vergleichbare Mikrowellenenergie zuzuführen.

In weiterer zweckmäßiger Ausgestaltung der Vorrichtung sind die Antennen der Schutzvorrichtung im Erdboden vertikal verschiebbar angeordnet. Dadurch ist pro Antenne ein zylindrisches Volumen des Erdbodens des umgrenzten Bodenvolumens definierbar, in dem sich die Mikrowellenenergie, ausgehend von der Antenne, ausbreitet und welches demgemäß periodisch erhitzt wird.

In fertigungstechnisch und wirkungsmäßig besonders vorteilhafter Ausgestaltung sind die Antennen der Schutzvorrichtung als in den Erdboden einführbare Hohlleiterantennen gestaltet. Dabei besteht zweckmäßigerweise die Hohlleiterantenne aus einem Rohr aus einem metallischen Werkstoff, dessen oberes Ende durch eine Kurzschlußplatte verschlossen ist, unterhalb der sich ein mit dem Mikrowellengenerator über die Koaxialkabelanordnung verbundener, ins Rohrinnere ragender Einkoppelstift befindet, während das untere Ende als Abstrahlende ausgeführt ist und ein Anpaßelement für eine optimale Mikrowellenenergieübertragung in den Erdboden aufweist. Dazu ist dieses Anpaßelement zweckmäßig als dielektrischer Einsatz ausgeführt und besitzt eine ein- oder mehrfach zylindrisch abgesetzte zylindrische Grundform.

In weiterer vorteilhafter Ausgestaltung sitzen die Hohlleiterantennen der Schutzvorrichtung jeweils in einem in den Erdboden eingebrachten Schutzrohr. Diese Ausführung ist hinsichtlich der vertikalen Verschiebbarkeit der Hohlleiterantennen im Erdboden besonders günstig, da von einzelnen Bodenbestandteilen keine Störungen ausgehen können.

Die Erfindung ist besonders zweckmäßig anwendbar, sofern das durch die Schutzvorrichtung zu schützende Bodenvolumen speziell zu schützende Objekte, insbesondere ein oder mehrere Bauwerke, wie Häuser, Brücken, Deiche u. dgl., und/oder Pflanzen, wie Bäume, Plantagen, Weinberge u. dgl. enthält.

Die Erfindung wird nachstehend an einem Ausführungsbeispiel näher erläutert. In der zugehörigen Zeichnung zeigen:
- Fig. 1: eine vereinfachte perspektivische Darstellung eines durch eine abgrenzende Schutzvorrichtung zu schützenden Gebäudes,
- Fig. 2: den Axialschnitt durch eine zweckmäßig ausgestaltete Hohlleiterantenne in Ausgangs- und vertikal verschobener Position.

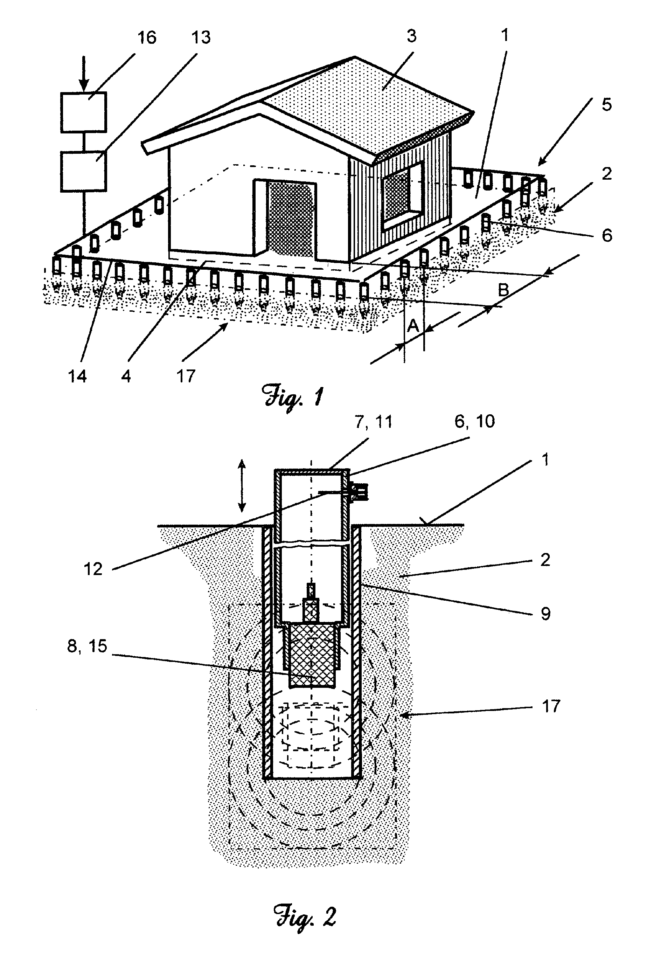

Im Bereich der Oberfläche 1 eines Bodenvolumen 2 befindet sich ein im wesentlichen aus Holz erbautes Haus 3, welches auf in das Bodenvolumen 2, d. h. in den Erdboden hineinführenden Fundament- bzw. Stützteilen 4 ruht und vor Termitenbefall geschützt werden soll (s. Fig. 1).

Demgemäß ist eine abgrenzende Schutzvorrichtung 5 vorgesehen. Diese besteht aus einer Mehrzahl von (zaunartig) in Reihe angeordneten Hohlleiterantennen 6, welche sich mit ihrem oberen Ende 7 oberhalb der Oberfläche 1 des Bodenvolumens 2 und mit ihrem Abstrahlende 8 im Erdboden, d. h. unterhalb der Oberfläche 1 des Bodenvolumens 2 befinden. Dazu sind in den Erdboden Schutzrohre 9 eingearbeitet worden (s. Fig. 2), in welchen die Hohlleiterantennen 6 vertikal durch einen nicht dargestellten Servoantrieb verschiebbar aufgenommen sind.

Die Hohlleiterantennen 6 sind im gleichen Abstand A angeordnet und die daraus gebildete abgrenzende Schutzvorrichtung 5 besitzt einen Abstand B vomHaus 3, wobei zwecks Erreichens eines gleichen, etwa konstanten Abstandes B die geometrische Figur der Schutzvorrichtung 5 der geometrischen Figur des Grundrisses des Hauses 3 analog ist. Im Ausführungsbeispiel handelt es sich dabei um jeweils ein Rechteck.

Die Hohlleiterantennen 6 bestehen aus einem Rohr 10 aus einer Kupferlegierung, dessen oberes Ende 7 durch eine Kurzschlußplatte 11 verschlossen ist. Unterhalb dieser befindet sich die Einkoppelstelle, bestehend aus einem quer ins Rohrinnere ragenden Einkoppelstift 12, der mit der Anschlußstelle für eine zu einem Mikrowellengenerator 13 führende Koaxialkabelanordnung 14 verbunden ist.

Das untere Ende des Rohrs 10 bildet das Abstrahlende 8 der Hohlleiterantenne 6. Es ist nach unten verjüngt ausgeführt und enthält ein Anpaßelement 15 für eine optimale Mikrowellenenergieübertragung in den Erdboden. Dazu besitzt es eine mehrfach zylindrisch abgesetzte zylindrische Grundform und ist als dielektrischer Einsatz ausgeführt.

Die einzelnen Hohlleiterantennen 6 sind über die Koaxialkabelanordnung 14 mit dem Mikrowellengenerator 13 verbunden, welchem eine Steuereinheit 16 zwecks Steuerung der Stromzufuhr zum Mikrowellengenerator 13 und der wahlweise in Zeitintervallen erfolgenden Einspeisung von Mikrowellenenergie in die Hohlleiterantennen 6 vorgeschaltet ist.

Bei Inbetriebnahme des Mikrowellengenerators 13 erzeugt dessen Magnetron eine hochfrequente Mikrowellenschwingung, welche über die Koaxialkabelanordnung 14 den Hohlleiterantennen 6 übertragen wird. Dabei werden die Mikrowellen durch den Einkoppelstift 12 in die Luftsäule des Rohrs 10 eingekoppelt, wobei sie sich Richtung Anpaßelement 15 am unteren Ende ausbreiten, dort ausgekoppelt werden und in Form eines etwa kugelförmigen Feldes in den Erdboden einwirken. Bei gleichzeitiger vertikaler Verschiebung der Hohlleiterantennen 6 bildet sich aus der Summe/Überlagerung kugelförmiger Felder ein etwa zylinderförmiges Feld von Mikrowellen um jede Hohlleiterantenne 6. Jedes dieser Felder tangiert beidseitig bei entsprechender Wahl des Abstandes A die Felder der benachbarten Hohlleiterantennen 6. Dadurch wird praktisch ein für eindringende Schädlinge, insbesondere Insekten, wie Termiten, undurchdringlicher Schutzwall 17 aus intermittierenden Mikrowellen und deren Auswirkungen, wie Erhitzung und longitudinale Schallwellen, gebildet (s. Fig. 1). D. h. das Eindringen dieser Schädlinge wird wirkungsvoll verhindert; sie werden abgewiesen oder vernichtet.

Bei geeigneter Wahl des Abstandes B tangieren die etwa zylinderförmigen Felder um jede Hohlleiterantenne 6 auch die Fundament- bzw. Stützteile 4 des Hauses 3, so daß dieses wirksam vor beispielsweise nach Innen eingeschleppten Schädlingen geschützt ist.

Die Erfindung ist nicht durch Einzelheiten des vorstehend beschriebenen Ausführungsbeispiels beschränkt. Insbesondere kann die abgrenzende Schutzvorrichtung 5 auch aus anders zweckmäßig gestalteten Antennen für die Einspeisung von Mikrowellenenergie ausgeführt sein.

### Bezugszeichenliste

- 1: Oberfläche
- 2: Bodenvolumen
- 3: Haus
- 4: Fundament- bzw. Stützteile
- 5: Schutzvorrichtung
- 6: Hohlleiterantenne
- 7: Oberes Ende
- 8: Abstrahlende
- 9: Schutzrohr
- 10: Rohr
- 11: Kurzschlußplatte
- 12: Einkoppelstift
- 13: Mikrowellengenerator
- 14: Koaxialkabelanordnung
- 15: Anpaßelement
- 16: Steuereinheit
- 17: Schutzwall

- A: Abstand
- B: Abstand

## Patentansprüche

1. Vorrichtung zur präventiven Verhinderung eines Befalls eines Bodenvolumens von im Erdboden hausenden tierischen Schädlingen, insbesondere Termiten, unter Verwendung einer mit einem Mikrowellengenerator über ein Koaxialkabei verbundenen, in den Erdboden einführbaren Antenne, über welche Mikrowellenenergie abstrahlbar ist,
**dadurch gekennzeichnet, daß** um das zu schützende Bodenvolumen (2) bzw. um speziell zu schützende Objekte (3) im oder auf dem Bodenvolumen (2) eine abgrenzende Schutzvorrichtung (5) vorgesehen ist, welche aus einer Mehrzahl von gleich- oder ungleich beabstandeten, in den Erdboden eingeführten Antennen (6) für die Abstrahlung von Mikrowellenenergie besteht.

2. Vorrichtung nach Anspruch 1, **dadurch gekennzeichnet, daß** die Antennen (6) der Schutzvorrichtung (5) über eine Koaxialkabelanordnung (14) mit einem oder mehreren zentralen Mikrowellengenerator(en) (13) für die Einspeisung von Mikrowellenenergie in eine größere Anzahl von Antennen (6) verbunden sind.

3. Vorrichtung nach Anspruch 1 und 2, **dadurch gekennzeichnet, daß** die Stromzufuhr zum Mikrowellengenerator (13) manuell und/oder automatisch steuerbar ist.

4. Vorrichtung nach Anspruch 1 bis 3, **dadurch gekennzeichnet, daß** die Einspeisung von Mikrowellenenergie in die Antennen (6) der Schutzvorrichtung (5) manuell und/oder automatisch steuerbar ist.

5. Vorrichtung nach Anspruch 4, **gekennzeichnet durch** eine permanente und/oder in vorwählbaren Zeitintervallen erfolgende Einspeisung von Mikrowellenenergie in die Antennen (6) der Schutzvorrichtung (5).

6. Vorrichtung nach Anspruch 1 bis 5, **dadurch gekennzeichnet, daß** eine Steuereinheit (16) dem oder den zentralen Mikrowellengenerator(en) (13) vorgeschaltet ist, die die Stromzufuhr zu dem/den zentralen Mikrowellengenerator(en) (13) und/oder die Einspeisung der Mikrowellenenergie in die Antennen (6) steuert.

7. Vorrichtung nach Anspruch 1 und 2, **dadurch gekennzeichnet, daß** die einem zentralen Mikrowellengenerator (13) zugeordneten Antennen (6) über die Koaxialkabelanordnung (14) parallel verschaltet sind.

8. Vorrichtung nach Anspruch 1, **dadurch gekennzeichnet, daß** die Antennen (6) der Schutzvorrichtung (5) im Erdboden vertikal verschiebbar angeordnet sind.

9. Vorrichtung nach Anspruch 1 und einem oder mehreren der folgenden Ansprüche, **dadurch gekennzeichnet, daß** die Antennen (6) der Schutzvorrichtung (5) als in den Erdboden einführbare Hohlleiterantennen (6) gestaltet sind.

10. Vorrichtung nach Anspruch 1 und 9, **dadurch gekennzeichnet, daß** die Hohlleiterantenne (6) aus einem Rohr (10) aus einem metallischen Werkstoff besteht, dessen oberes Ende (7) durch eine Kurzschlußplatte (11) verschlossen ist, unterhalb der sich ein mit dem Mikrowellengenerator (13) über die Koaxialkabelanordnung (14) verbundener, ins Rohrinnere ragender Einkoppelstift (12) befindet, während das untere Ende als Abstrahlende (8) ausgeführt ist und ein Anpaßelement (15) für eine optimale Mikrowellenenergieübertragung in den Erdboden aufweist.

11. Vorrichtung nach Anspruch 10, **dadurch gekennzeichnet, daß** das Anpaßelement (15) als dielektrischer Einsatz ausgeführt ist und eine ein- oder mehrfach zylindrisch abgesetzte zylindrische Grundform besitzt.

12. Vorrichtung nach Anspruch 1, 9 bis 11, **dadurch gekennzeichnet, daß** die Hohlleiterantennen (6) der Schutzvorrichtung (5) jeweils in einem in den Erdboden eingebrachten Schutzrohr (9) sitzen.

13. Vorrichtung nach Anspruch 1 und einem oder mehreren der folgenden Ansprüche, **dadurch gekennzeichnet, daß** das durch die Schutzvorrichtung (5) zu schützende Bodenvolumen (2) speziell zu schützende Objekte (3), insbesondere ein oder mehrere Bauwerke, wie Häuser (3), Brücken, Deiche u. dgl., und/oder Pflanzen, wie Bäume, Plantagen, Weinberge u. dgl. enthält.
